# FASCICULE DE BREVET EUROPEEN

(11) **EP 2 225 483 B1**
(45) Date de publication et mention de la délivrance du brevet: **02.05.2012**
(21) Numéro de dépôt: 08858556.7
(22) Date de dépôt: 12.12.2008
(51) Int. Cl.: F16K 1/30

(54) **AGENCEMENT D'UN DISPOSITIF DE REMPLISSAGE ET DE FILTRATION DANS UN CORPS DE VANNE**
ANORDNUNG FÜR EINE FÜLL- UND FILTERVORRICHTUNG IN EINEM VENTILKÖRPER
THE ARRANGEMENT OF A FILLING AND FILTERING DEVICE IN A VALVE BODY

(30) Priorité: 12.12.2007 LU 91384
(43) Date de publication de la demande: 08.09.2010
(73) Titulaire: LUXEMBOURG PATENT COMPANY S.A., 7440 Lintgen (LU)
(72) Inventeur: KREMER, Paul, L-7263 Walferdange (LU); RISSE, Claude, F-57310 Bertrange (FR)
(74) Mandataire: Lecomte, Didier
(86) Numéro de dépôt international: PCT/EP2008/067379
(87) Numéro de publication internationale: WO 2009/074668

(56) Documents cités:
- EP-A- 1 126 202
- EP-A- 1 437 538
- FR-A- 799 122
- FR-A- 2 724 241
- FR-A- 2 757 243

## Description

### Domaine technique

La présente invention a trait à un agencement particulier d'un dispositif de remplissage sur une vanne pour bouteille de gaz, cet agencement étant préférentiellement en relation avec un dispositif de filtration.

### État de la technique antérieure

Le document WO 2005/003607 (OCENCO, INC.) 13.01.2005 décrit une vanne pour bouteille de gaz où le dispositif de fermeture comporte de manière classique un élément mobile coopérant avec un siège fixe par rapport au corps de sorte à assurer l'étanchéité de la vanne. Le siège consiste en un disque de matière déformable qui est logé sur un épaulement dans le fond d'un alésage du corps de la vanne. La surface de l'élément mobile coopérant avec le siège déformable présente une forme annulaire concentrique avec le siège de sorte à former un chemin détourné pour le gaz, évitant ainsi un contact direct du gaz sous pression avec la surface du siège déformable. Le corps de vanne est pourvu d'un passage au centre de l'épaulement de sorte à communiquer avec la bouteille. L'orifice du disque correspond à ce passage. Ce passage est pourvu d'un filtre en bronze fritté de sorte à filtrer tout contaminant solide lors du débit de gaz en service évitant ainsi des dommages au siège en matière déformable. L'enseignement de ce document tend à résoudre le problème de détérioration du siège déformable. Ce document n'aborde en aucun cas la question du remplissage de la bouteille. Le remplissage par l'orifice de sortie n'est pas praticable, en tout cas pas pour de grands débits, au vu des pertes de charges qu'occasionnerait le filtre. De plus, une telle architecture aurait pour effet d'accumuler les contaminants solides d'un côté du filtre pour ensuite les évacuer vers le dispositif de fermeture et l'installation connectée en service à cette vanne. L'accessibilité très réduite au filtre rend sa maintenance également difficile.

Le document GB 2300692 A (KABUSHIKI KAISHA NERIKI) 13.11.1996 décrit une vanne pour bouteille de gaz, ladite vanne comportant un dispositif de fermeture et, en aval, un dispositif de maintien de pression résiduelle au niveau de la sortie de gaz de la vanne. Ce dispositif autorise également le passage de gaz en sens inverse pour le remplissage de la bouteille. Aucun système de filtration du gaz n'est prévu.

Le document WO 021097314 (HULL, WENDELL) 05.12.2002 divulgue une vanne pour bouteille de gaz comportant un dispositif de filtration n'agissant que lors du débit de gaz en service et pas lors du remplissage. Ce dispositif permet certes un remplissage de la bouteille via l'orifice de service en grand débit tout en assurant une protection du siège de la vanne mais est relativement complexe et coûteux.

Les documents de brevet FR 799 922 A et EP 1 437 538 A1 divulguent un dispositif de vanne conforme au préambule de la revendication 1. Ces dispositifs comportent des moyens de filtration disposés de sorte à ne filtrer le gaz que lors de débit de service. Leur agencement en aval du passage reliant l'entrée au raccord de remplissage réduit cependant leur accessibilité ainsi que leur taille.

L'invention a pour objet d'éviter les problèmes sus mentionnés.

### Exposé de l'invention

L'invention concerne un dispositif de vanne pour conteneur de gaz sous pression comprenant un corps avec un premier raccord destiné à être connecté au conteneur de gaz et servant d'entrée de gaz, un deuxième raccord servant de sortie de gaz et un premier passage reliant les premier et deuxième raccords d'entrée et de sortie de gaz, respectivement; un dispositif de fermeture du premier passage entre l'entrée et la sortie; des moyens de filtration disposés en amont du dispositif de fermeture; où le corps comprend, en outre, un troisième raccord servant au remplissage du conteneur, en communication avec l'entrée du dispositif via un second passage reliant le troisième raccord avec l'entrée du dispositif sans passer par le dispositif de fermeture ; et où les moyens de filtration sont agencés dans une chambre à l'intersection des premier et deuxième passages et agencée latéralement par rapport au dispositif de fermeture, et de sorte à ne filtrer que le flux de gaz du premier passage lors de débit en service.

Le volume de la chambre est préférentiellement supérieur au volume des moyens de filtration de sorte à permettre au débit de gaz provenant du troisième raccord vers l'entrée de contourner les moyens de filtration.

La chambre peut être délimitée au moins en partie par un élément du troisième raccord.

La chambre est préférentiellement de forme généralement cylindrique, l'intersection du premier passage avec la chambre étant située au fond de la chambre et, préférentiellement, l'intersection du second passage avec la chambre étant située au niveau de la périphérie de la chambre.

Avantageusement, les moyens de filtration comprennent un élément en matériau poreux, préférentiellement en forme de chapeau, disposé sur le fond de la chambre en face de l'intersection du premier passage avec la chambre.

Préférentiellement, le troisième raccord comprend un élément vissé dans la chambre; les moyens de filtration étant maintenus en place par un ressort appuyant sur l'élément vissé et les moyens de filtration, préférentiellement sur la collerette de l'élément en forme de chapeau.

Avantageusement, le troisième raccord comprend un clapet anti-retour comprenant un ressort maintenant les moyens de filtration en place dans la chambre.

### Description sommaire des figures des dessins

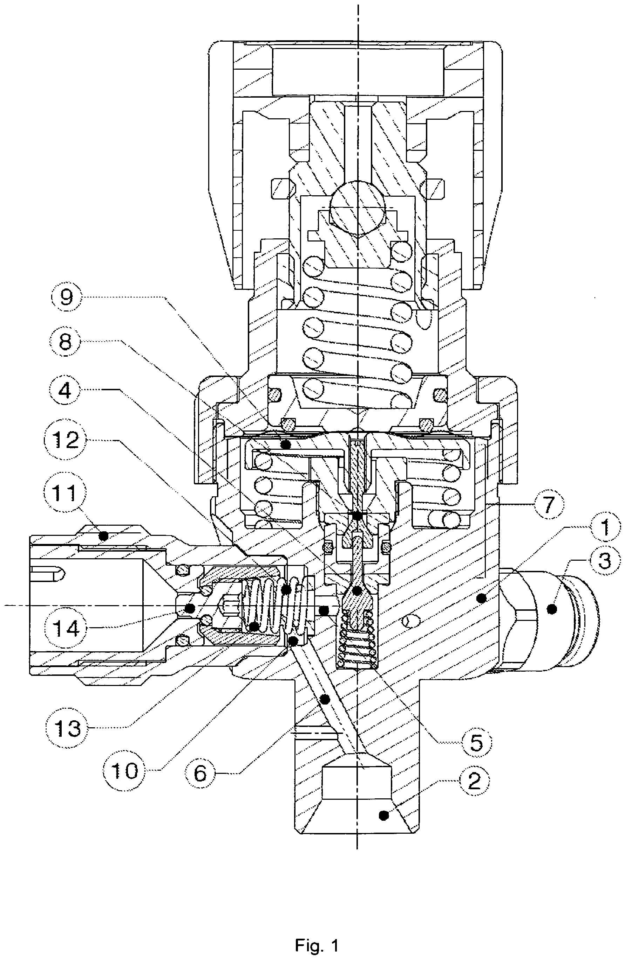

La figure 1 est une vue en coupe d'une vanne avec détente intégrée conforme à l'invention.

### Meilleure manière de réaliser l'invention

La vanne est constituée d'un corps 1 comprenant un raccord 2 d'entrée du gaz. Ce raccord est destiné à être connecté à un conteneur de gaz tel qu'une bouteille ou encore une canalisation d'alimentation en gaz sous pression. Le corps comprend également un raccord 3 de sortie de gaz destiné à être connecté en service à un consommateur. Le raccord de sortie 2 est en communication avec la sortie du détendeur 7 par un perçage réalisé dans le corps et non représenté. Le détendeur 7 a la particularité de comporter deux éléments d'obturation coniques 8 et 4 en série servant également de dispositif de fermeture de la vanne. En effet, cette construction a la particularité d'offrir une double sécurité car les deux éléments d'obturation sont en appui sur leurs sièges respectifs en position fermée de la vanne, c'est-à-dire telle que représentée à la figure. Dans cet état, le dispositif supérieur servant à pré contraindre le ressort du détendeur est complètement relâché, ce qui signifie que la partie mobile 9 du détendeur est soumise à une contrainte minimale dirigée vers le bas. Ceci a pour conséquence que le ressort du détendeur lève au maximum la partie mobile 9 de sorte à ce que le premier élément obturateur (supérieur) 8 qui est attelé à la partie mobile 9 du détendeur est en appui de manière étanche sur son siège. De plus, le second élément obturateur (inférieur) 4 est dimensionné et lié au premier par un système de butée de sorte à ce qu'il arrive en appui sur son siège lors d'un mouvement vertical ascendant des deux éléments obturateurs et de la partie mobile du détendeur avant le premier. La liaison du type butée entre les deux éléments obturateurs ainsi que le ressort du second élément obturateur ont pour effet que le second obturateur ferme le passage de gaz avant le premier. Une fois les deux obturateurs en appui sur leurs sièges respectifs, il y a donc une double sécurité par rapport à la fermeture.

Il est à préciser que ce dispositif de fermeture double intégré dans un dispositif de détente est purement exemplatif et ne saurait en aucun cas limiter l'invention. En effet, le concept de la présente invention s'applique à tous types de dispositif de fermeture, y compris des dispositifs de détente agissant comme dispositif de fermeture.

Le dispositif de fermeture 4 et 8 est en liaison avec une chambre 10 comprenant un filtre 12. La chambre est de forme généralement cylindrique et est usinée directement dans le corps 1. Le filtre 12 est en forme de chapeau et coiffe ainsi l'orifice du passage 5 reliant la chambre au dispositif de fermeture 4 et 8. La chambre est dimensionnée de sorte à ce que son volume soit supérieur à celui du filtre, permettant ainsi au gaz de le contourner.

La chambre 10 est en liaison avec le raccord d'entrée 2 via un passage 6. Dans l'exemple décrit ici, un raccord 11 de remplissage du conteneur est en contact direct avec la chambre 10. Cet agencement offre l'avantage d'une certaine simplicité de réalisation tant au niveau usinage que montage. Le raccord 11 est vissé dans un filetage formé dans le corps. Le raccord 11 comprend des moyens de connexion avec une source de remplissage et un clapet anti-retour 14. Le montage de la figure a la particularité que le filtre 12 et le clapet anti-retour 14 coopèrent dans la mesure où le ressort 13 du clapet 14 maintien le filtre 12 en place. Préférentiellement, le filtre est logé dans un logement dans la chambre.

Il est à noter que le filtre pourrait présenter d'autres designs, par exemple du type cylindrique ou tout autre design susceptible de filtrer le flux de gaz s'écoulant du conteneur vers la sortie via le dispositif de fermeture tout en ne filtrant pas, ou en tout cas pas de manière essentielle, le flux de gaz s'écoulant du raccord de remplissage vers le conteneur lors d'une opération de remplissage.

La chambre 10 est, dans l'exemple de la figure, agencée latéralement par rapport au dispositif de fermeture 4 et 8. Le passage 5 est horizontal et le passage 6 en oblique.

Les avantages de ce design sont multiples. Ce design est en premier lieu très simple et donc peu coûteux à réaliser. En effet, l'usinage de la chambre 10 sert à former la chambre ainsi que la connexion pour le raccord de remplissage. De plus, le ressort du clapet anti-retour qui maintient le filtre en place réduit l'encombrement et le nombre de pièces. La position de la chambre autorise un certain volume pour la chambre et donc de bonnes caractéristiques de débit. La taille de la chambre en combinaison avec le design du filtre en fond de chambre autorise une certaine taille du filtre et donc des pertes de charges réduites tout en assurant une bonne qualité de filtration.

## Revendications

1. Dispositif de vanne pour conteneur de gaz sous pression comprenant:
un corps (1) avec un premier raccord (2) destiné à être connecté au conteneur de gaz et servant d'entrée de gaz, un deuxième raccord (3) servant de sortie de gaz et un premier passage (5) reliant les premier et deuxième raccords d'entrée (2) et de sortie (3) de gaz , respectivement;
un dispositif de fermeture (4 , 8) du premier passage (5) entre l'entrée (2) et la sortie (3);
des moyens de filtration (12) disposés en amont du dispositif de fermeture (4, 8) ;
le corps (1) comprenant, en outre, un troisième raccord (11) servant au remplissage du conteneur, en communication avec l'entrée (2) du dispositif via un second passage (6) reliant le troisième raccord (11) avec l'entrée (2) du dispositif sans passer par le dispositif de fermeture (4, 8) ; **caractérisé en ce que** les moyens de filtration (12) sont agencés dans une chambre (10) à l'intersection des premier et deuxième passages (5 ; 6) et agencée latéralement par rapport au dispositif de fermeture (4,8), et de sorte à ne filtrer que le flux de gaz du premier passage (5) lors de débit en service.

2. Dispositif de vanne selon la revendication précédente, **caractérisé en ce que** le volume de la chambre (10) est supérieur au volume des moyens de filtration (12) de sorte à permettre au débit de gaz provenant du troisième raccord (11) vers l'entrée (2) de contourner les moyens de filtration (12).

3. Dispositif de vanne selon l'une des revendications précédentes, **caractérisé en ce que** la chambre (10) est délimitée au moins en partie par un élément du troisième raccord (11).

4. Dispositif de vanne selon l'un des revendications précédentes, **caractérisé en ce que** la chambre (10) est de forme généralement cylindrique, l'intersection du premier passage (5) avec la chambre étant située au fond de la chambre (10) et, préférentiellement, l'intersection du second passage (6) avec la chambre étant située au niveau de la périphérie de la chambre (10).

5. Dispositif de vanne selon l'une des revendications précédentes, **caractérisé en ce que** les moyens de filtration (12) comprennent un élément en matériau poreux (12), préférentiellement en forme de chapeau, disposé sur le fond de la chambre (10) en face de l'intersection du premier passage (5) avec la chambre (10).

6. Dispositif de vanne selon l'une des revendications précédentes, **caractérisé en ce que** le troisième raccord (11) comprend un élément vissé dans la chambre (10); les moyens de filtration (12) étant maintenus en place par un ressort (13) appuyant sur l'élément vissé et les moyens de filtration (12), préférentiellement sur la collerette de l'élément en forme de chapeau.

7. Dispositif de vanne selon l'une des revendications précédentes, **caractérisé en ce que** le troisième raccord comprend un clapet anti-retour comprenant un ressort (13) maintenant les moyens de filtration (12) en place dans la chambre (10).

## Claims

1. Valve for a pressurised gas container comprising:
a body (1) with a first connection (2) intended to be connected to the gas container and used as the gas inlet, a second connection (3) used as the gas outlet and a first interconnection (5) connecting the first and second connectors, the gas inlet (2) and gas outlet (3) connectors respectively; a closure device (4,8) in the first interconnection (5) between the inlet (2) and the outlet (3); a means of filtration (12) located upstream from the closure device (4, 8); the body (1) further comprising a third connection (11) for filling the container, communicating with the inlet (2) of the device via a second interconnection (6) connecting the third connection (11) with the inlet (2) of the device without passing through the closure device (4, 8); **characterised in that** the means of filtration (12) is arranged in a chamber (10) located at the intersection of the first and second interconnections (5, 6) and arranged laterally with respect to the closure device (4,8) and so as to filter only the stream of gas from the first interconnection (5) which flows when it is in use.

2. A valve device in accordance with the preceding claim, **characterised in that** the volume of the chamber (10) is greater than the volume of the means of filtration (12) so as to allow the flow of gas from the third connection (11) to the inlet (2) to bypass the means of filtration (12).

3. A valve device in accordance with one of the preceding claims, **characterised in that** the chamber (10) is delimited at least in part by an element of the third connection (11).

4. A valve device in accordance with one of the preceding claims, **characterised in that** the chamber (10) is of generally cylindrical shape, the intersection of the first interconnection (5) with the chamber being located at the bottom end of the chamber (10) and, preferably, the intersection of the second interconnection (6) with the chamber being located at the periphery of the chamber (10).

5. A valve device in accordance with one of the preceding claims, **characterised in that** the means of filtration (12) comprises an element of porous material (12), preferably cap-shaped, located at the bottom end of the chamber (10) opposite the intersection of the first passage (5) with the chamber (10).

6. A valve device in accordance with of the preceding claims, **characterised in that** the third connection (11) comprises a member screwed into the chamber (10); the means of filtration (12) being held in place by a spring (13) bearing against the screwed member and the means of filtration (12), preferably on the collar of the cap-shaped element.

7. A valve device in accordance with one of the preceding claims, **characterised in that** the third connection comprises a non-return valve comprising a spring (13) holding the means of filtration (12) in place in the chamber (10).

## Patentansprüche

1. Ventilvorrichtung für Druckgasbehälter, umfassend:
einen Körper (1) mit einem ersten Anschluss (2), der für die Verbindung mit dem Gasbehälter vorgesehen ist und als Gaseinlass dient; einen zweiten Anschluss (3), der als Gasauslass dient; und einen ersten Kanal (5), der jeweils die ersten und zweiten Anschlüsse für den Einlass (2) und den Auslass (3) von Gas verbindet;
eine Schließvorrichtung (4, 8) des ersten Kanals (5) zwischen dem Einlass (2) und dem Auslass (3);
Filtermittel (12), die in Strömungsrichtung vor der Schließvorrichtung (4, 8) angeordnet sind;
wobei der Körper (1), außerdem, einen dritten Anschluss (11) umfasst, der zum Füllen des Behälters dient und mit dem Einlass (2) der Vorrichtung über einen zweiten Kanal (6) in Verbindung steht, der den dritten Anschluss (11) mit dem Einlass (2) der Vorrichtung, ohne durch die Schließvorrichtung (4, 8) zu verlaufen, verbindet; **dadurch gekennzeichnet, dass** die Filtermittel (12) in einer Kammer (10) am Schnittpunkt des ersten und des zweiten Kanals (5, 6) angeordnet sind und in Bezug auf die Schließvorrichtung (4, 8) seitlich und so angeordnet sind, dass während des Durchflusses im Betrieb nur der Gasstrom des ersten Kanals (5) gefiltert wird.

2. Ventilvorrichtung nach dem vorangehenden Anspruch, **dadurch gekennzeichnet, dass** das Volumen der Kammer (10) größer als das Volumen der Filtermittel (12) ist, um dem Durchfluss des Gases, vom dritten Anschluss (11) zum Einlass (2), die Umgehung der Filtermittel (12) zu gestatten.

3. Ventilvorrichtung nach einem der vorangehenden Ansprüche, **dadurch gekennzeichnet, dass** die Kammer (10) mindestens teilweise durch ein Bauteil des dritten Anschlusses (11) begrenzt ist.

4. Ventilvorrichtung nach einem der vorangehenden Ansprüche, **dadurch gekennzeichnet, dass** die Kammer (10) eine im Allgemeinen zylindrische Form aufweist, wobei der Schnittpunkt des ersten Kanals (5) mit der Kammer sich am Boden der Kammer (10) befindet und wobei, bevorzugt, der Schnittpunkt des zweiten Kanals (6) mit der Kammer sich im Bereich des Randes der Kammer (10) befindet.

5. Ventilvorrichtung nach einem der vorangehenden Ansprüche, **dadurch gekennzeichnet, dass** die Filtermittel (12) ein Bauteil aus porösem Material (12) umfassen, das bevorzugt kappenförmig ist und auf dem Boden der Kammer (10) gegenüber dem Schnittpunkt des ersten Kanals (5) mit der Kammer (10) angeordnet ist.

6. Ventilvorrichtung nach einem der vorangehenden Ansprüche, **dadurch gekennzeichnet, dass** der dritte Anschluss (11) ein in die Kammer (10) geschraubtes Bauteil umfasst; wobei die Filtermittel (12) durch eine Feder (13) in ihrer Position gehalten werden, die auf das geschraubte Bauteil und die Filtermittel (12), bevorzugt auf den Flansch des kappenförmigen Bauteils, drückt.

7. Ventilvorrichtung nach einem der vorangehenden Ansprüche, **dadurch gekennzeichnet, dass** der dritte Anschluss ein Rückschlagventil mit einer Feder (13) umfasst, die die Filtermittel (12) in der Kammer (10) in ihrer Position hält.
